# FASCICULE DE BREVET EUROPEEN

(11) **EP 2 402 714 B1**
(45) Date de publication et mention de la délivrance du brevet: **17.04.2013**
(21) Numéro de dépôt: 10168374.6
(22) Date de dépôt: 02.07.2010
(51) Int. Cl.: G01B 21/04, G01B 7/287

(54) **Dispositif de mesure de dimensions**
Vorrichtung zum Messen von Abmessungen
Dimension measuring device

(43) Date de publication de la demande: 04.01.2012
(73) Titulaire: TESA SA, 1020 Renens (CH)
(72) Inventeur: Hochet, Bertrand, 1073, Savigny (CH); Jordil, Pascal, 1612 Ecoteaux (CH); Marillet, Serge, 1033 Cheseaux-sur-Lausanne (CH); Pompili, Pierre, 1965 St-Germain (Savièse) (CH)
(74) Mandataire: P&TS SA (AG, Ltd.)

(56) Documents cités:
- EP-A1- 1 562 020
- WO-A1-2005/109166
- WO-A1-2008/049171
- US-A- 3 737 856

## Description

La présente invention concerne un système de sondes de mesure de déplacement. Des modes de réalisation de la présente invention concernent notamment un système de mesure multiple pour la mesure de dimensions relatives organisés autour d'un réseau de communication sans fil interfacé par un système de programmation et de supervision ou un système d'élaboration de données qui pilote ledit système de mesure au moyen d'horloges embarquées.

### Etat de la technique

On connait des systèmes de mesure permettant la mesure de plusieurs dimensions d'une pièce simultanément. Ces dispositifs, aussi connus sous la dénomination de systèmes de mesure multi cotes, sont utilisés typiquement dans les opérations de contrôle de qualité et vérification dimensionnelle de pièces finies, usinées, en particulier, mais pas uniquement, de pièces obtenues par usinage automatique.

Ces systèmes comprennent généralement un système de positionnement de la pièce à mesurer et un positionnement des éléments de mesure. De plus ils comprennent souvent des butées pour positionner les parties mobiles de manière répétable pour mesurer une pièce que placée dans le système. Généralement on trouve des chariots ou des éléments mobiles supportant des comparateurs ou des sondes de mesure unidimensionnelle qui viennent en contact en même temps en plusieurs points prédéterminés de la pièce. Les sondes fournissent au moyen de transducteurs de grande précision un signal électrique de mesure lequel est transmis à une interface électronique externe qui pilote la sonde. Ensuite les résultats sont généralement envoyé à un système informatique qui permet d'analyser et calculer les paramètres et effectuer les statistiques dimensionnels des grandeurs, comme par exemple épaisseurs, diamètres, perpendicularités, conicités, parallélismes, excentricités, etc.

Les dispositifs de mesure multi cotes connus utilisent aussi bien des sondes de longueur avec une touche coulissante que des sondes à levier avec une touche pivotante, selon le nécessité et la configuration des pièces à mesurer. Les transducteurs sont le plus souvent des transducteurs de type inductif, comme par exemple des LVDT (Linear Variable Differential Transformer) ou des demi-ponts inductifs, et fournissent typiquement des mesures avec une précision de l'ordre de 1 µm dans une plage de mesure de quelques millimètres. Pour des questions d'encombrement l'électronique est souvent externe au transducteur.

Le document WO2005109166 décrit une sonde de longueur comprenant une touche de palpage coulissante pour mesurer la surface d'une pièce mécanique. Un transducteur inductif compris dans la sonde permet de convertir le déplacement de la partie mobile de la sonde en un signal électrique qui est ensuite transmis à un dispositif d'affichage ou à un ordinateur externe. La communication vers l'ordinateur a lieu par une interface USB ou sans fil.

Le document EP 1 562 020 A1 montre un dispositif avec une seule sonde avec une synchronisation conventionnelle, US 3 737 856 montre plusieurs sondes avec une seule horloge et WO 2008/049171 A1 montre la mesure de l'écoulement d'airain dans une mine avec des sondes programmables.

Un inconvénient des sondes connues est que chacune doit être connectée à une électronique de mesure externe, laquelle s'occupe de transformer les données analogiques provenant du capteur inductif, et de les transmettre à un système de supervision. Dans le cas des sondes sans fil, les mesures sont déclenchées par un signal de déclenchement de la mesure et les mesures sont ensuite datées du moment de la mesure, car les systèmes ont des retards variables. Chaque élément de mesure peut ainsi avoir un décalage de mesure qui occasionne des erreurs difficiles à corriger. Il est difficile de garantir la synchronisation des transferts des différents éléments quand on ne sait pas ce qu'ils font ni au moment de la mesure ni au moment de l'envoi de résultats. De plus ces systèmes s'appuient sur des protocoles de transmission asynchrone entre le déclenchement de la mesure et la récupération des mesures, ce qui rend la transmission de ces systèmes compliquée, lente et des données pas toujours comparables. Enfin ces systèmes peuvent être amenés à recevoir des informations inutiles au moment de la mesure, ce qui peut provoquer des retards dans le traitement.

### Bref résumé de l'invention

Un but de la présente invention est de proposer un système de mesure de variation de dimension utilisable comme dispositif de mesure multi cotes, exempt des limitations des dispositifs et systèmes connus. Selon l'invention, ces buts sont atteints notamment au moyen de l'objet de la revendication principale.

Cette solution présente notamment l'avantage par rapport à l'art antérieur de permettre de simplifier la communication et effectuer la mesure d'un nombre important de sondes simultanément. Les sondes sont autonomes au moment de la mesure et n'effectuent pas d'autres opérations qui pourraient perturber la mesure. Cet avantage par rapport à l'art antérieur permet de limiter la consommation, les perturbations et garantit la ponctualité, la qualité et la précision de mesure.

La connaissance exacte de l'instant de la mesure est très important. Cette invention permet de programmer avec précision l'instant auquel la mesure doit être effectuée. Celui-ci est envoyé au moyen du réseau sans fil à toutes les sondes concernées pour qu'à l'instant de la mesure les sondes ne s'occupent que de la mesure. Au moyen d'une horloge embarquée synchronisée sur celle de l'émetteur principal, les sondes effectuent la mesure à l'instant programmé et retournent, séquentiellement, de façon aléatoire ou , préférablement, dans un ordre déterminé, le résultat de la mesure par une transmission sans fil à l'émetteur principal qui peut ensuite les transmettre à un poste de supervision et par exemple commander ensuite un système de triage des pièces.

Les sondes peuvent être aussi dotées d'autres moyens des mesures permettant de tenir compte des perturbations environnementales au moment de la mesure, par exemple des sondes de température, afin de corriger les erreurs de mesure provoqué par les effets thermiques influençant le transducteur électrique ou les dimensions mécaniques, ou des capteurs de force, pour mesurer la force de contact avec la pièce à mesurer, ou des capteur d'inclinaison, ou des organes de mesure permettant de qualifier l'état de la sonde, ou encore le niveau de charge d'une batterie, la qualité du signal radio ou tout autre paramètre environnemental.

### Brève description des figures

Des exemples de mise en oeuvre de l'invention sont indiqués dans la description illustrée par les figures annexées dans lesquelles :
La figure 1 illustre très schématiquement une sonde de longueur selon un aspect de la présente invention.
La figure 2 montre schématiquement un dispositif de mesure multi cotes selon un aspect de l'invention
La figure 3 illustre un schéma fonctionnel d'une unité de traitement selon un aspect de l'invention.

### Exemple(s) de mode de réalisation de l'invention

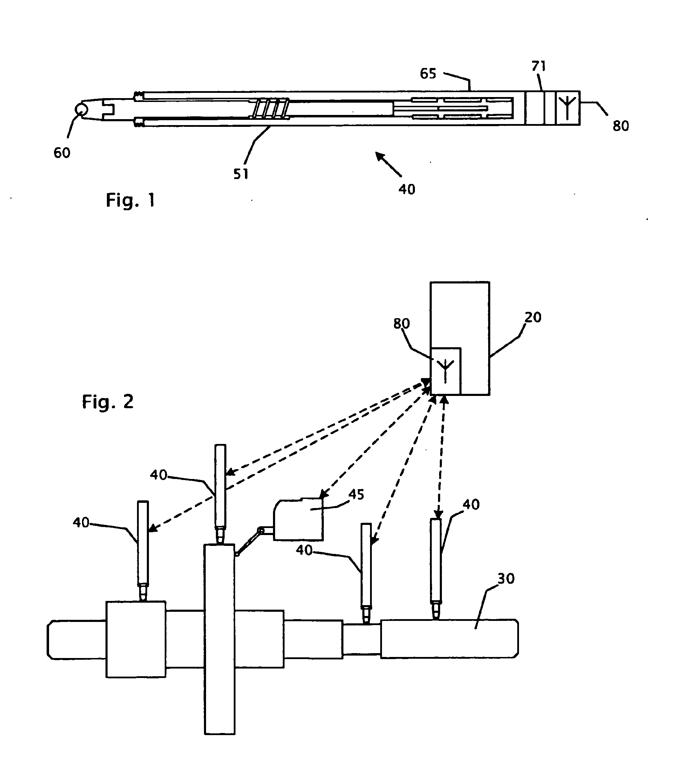

La figure 1 illustre un exemple de sonde de longueur 40 utilisable dans le cadre de l'invention. La sonde 40 comporte une touche 60, par exemple une sphère en métal dur dont le diamètre est parfaitement connu, à l'extrémité d'une tige 62 coulissante à l'intérieur d'un boîtier cylindrique 51. Un palier non représenté, ou un autre dispositif de guidage linéaire approprié, permet le coulissement axial précis de la tige 62 et un mouvement parfaitement reproductible de la touche 60, de préférence rectiligne.

La sonde 40 comporte un transducteur 65 permettant la mesure instantanée du déplacement de la tige 62 et de la touche 60 par rapport au boîtier 51. Le transducteur 65 peut être un transducteur inductif, par exemple un transformateur linéaire différentiel (LVDT - Linear Variable Differential Transformer) ou un demi-pont inductif (HBT - Half Bridge Transformer) délivrant un signal analogique en AC dont l'amplitude dépend de manière connue du déplacement de la touche 60. L'invention peut également comporter un ou plusieurs transducteurs dont la technologie est par exemple et pas seulement optique, magnétique, piézoélectrique, capacitif, ultrasonique, des extensomètres comprenant des jauges de contrainte, un détecteur de proximité, de contact ou encore des accéléromètres ou sonde de température ou toute combinaison de plusieurs genre de capteur entre eux, dont l'information de distance est soit brute soit entièrement ou partiellement traitée numériquement.

En général le transducteur permet la mesure de la position de la touche 60 avec une reproductibilité très bonne, par exemple une reproductibilité de 0,4 µm avec une étendue de mesure de ±2 mm. De manière générale, l'erreur admissible en métrologie dimensionnelle (MPE maximum permissible error) augmente avec la grandeur du déplacement d'où l'intérêt de rester proche de valeurs calibrées pour pouvoir utiliser des sondes à faible course avec une faible MPE. Les palpeurs LVDT sont essentiellement utilisés pour de mesure de grande précision dans une course faible. Pour des mesures dans de plages de dimension plus importantes, on recourt à d'autres technologies. Le système de l'invention ne se limite donc pas aux palpeurs inductifs LVDT ou HBT, mais couvre aussi tout transducteurs permettant de retirer une information dimensionnelle précise dans une plage de mesure adaptée à la situation.

Tous les types de transducteur de distance sont utilisables dans cette invention. La première étape consiste à convertir l'information de distance en information électrique. La position est mesurée par le transducteur qui retourne essentiellement une mesure électrique analogique puis ce résultat est traité pour le transformer en information numérique qui ensuite peut être traitée pour effectuer une correction de linéarisation selon une fonction obtenue par calibration. La linéarisation peut être effectuée soit par application de formules mathématiques permettant d'approcher le comportement du transducteur, soit par interpolation d'un nombre discret de positions calibrées, soit avec des tables de correspondance entièrement mesurée et déterminée avec précision pour chaque pas de résolution du transducteur. Ensuite il est possible de faire intervenir d'autres corrections liées à des capteurs environnementaux qui vont aider à tenir compte de variations qui influencent la mesure au niveau du capteur ou au niveau de la grandeur physique mesurée, comme par exemple : réflexion de rayon lumineux, échauffement de bobines, température ambiante, force de contact, attraction terrestre, pour n'en citer que quelques-uns.

L'invention ne se limite pas seulement à des sondes de mesure de dimension à déplacement linéaire axial comme montré à la figure 1, mais comprend aussi des variantes, non représentées, dans lesquelles la touche est portée par une tige pivotante, et l'inclinaison de la touche est convertie en signal de mesure en fonction du déplacement mesuré par un transducteur axial ou angulaire.

Les sondes optiques, capacitives, ultrasoniques, et toutes les sondes sans contact permettent aussi d'effectuer la mesure de distance par réflexion selon le même principe et avec les mêmes contraintes. Le résultat électrique mesuré est, lui aussi, fonction de la distance à mesurer et très souvent nécessite un traitement de linéarisation. On peut aussi avoir recours à des détecteurs de proximité, de contact pour observer des grandeurs moins essentielles de dimension, ou des capteurs de force, de pression ou vibratoire pour mesurer dans l'infiniment petit.

Dans la technique connue ces capteurs sont utilisés dans des situations essentiellement statiques, laissant un temps suffisant pour la stabilisation des grandeurs électriques et pour une acquisition séquentielle, des points stabilisés. Un avantage tiré de cette invention est de pouvoir effectuer ces mesures de manière plus rapide, car la période de stabilité nécessaire est réduite à l'instant d'acquisition de l'échantillonnage. Il est enfin possible d'effectuer des mesures dynamiques avec précision, à des instants de mesure prédéterminés avec précision, sans risquer que les sondes soient occupées à d'autres tâches à l'instant précis de la mesure.

Dans l'invention présentée, la sonde 40 comporte une unité électronique de traitement et de contrôle 71 arrangée pour recevoir le signal électrique généré par le transducteur 65 et le transformer en un signal numérique. Cette unité effectue le traitement du signal électrique pour qu'il devienne proportionnel à la distance de déplacement observée par le transducteur, de préférence selon une unité de mesure normalisée comme par exemple en mV/µm. Préférablement, l'unité de traitement et de contrôle 71 est arrangée pour corriger, pour chaque genre de transducteur, les non-linéarités de mesure spécifique au transducteur 65 par rapport au déplacement, par exemple au moyen de base de données individuels de calibration enregistrés dans une unité de mémoire ou de fonctions paramétriques relatives au comportement du transducteur qui nécessite une unité de calcul pour restituer une valeur de mesure linéaires à partir de la grandeur électrique.

La sonde 40 comprend aussi une interface de communication sans fil 80 permettant la communication bidirectionnel de données. Dans l'exemple illustré, l'interface sans fil 80 et l'unité de traitement et de contrôle 71 sont contenus dans le même boitier que la sonde 40. On peut aussi imaginer, toutefois, que l'unité de traitement et de contrôle 71 et/ou l'interface sans fil 80 constituent un ou des éléments externes reliés entre eux par câble ou fibre optique à la sonde 40, pour des raison d'encombrement à l'endroit ou est effectuée la mesure.

L'interface sans fil 80 est constituée d'une interface radio permettant la communication et l'échange d'informations dans un réseau sans fil local classique autour des IEEE802.11 et IEEE802.15 comme le WIFI, le ZigBee, le Bluetooth, dans des domaines de fréquence existants, préférablement avec plusieurs plages de fréquences disponibles. Ce système peut aussi s'adapter à d'autre type de modulation comme le GSM ou d'autres standart du commerce. La communication sera dédiée à cette application, mais respectera les standards pour ne pas perturber d'autres usages. Ce réseau permet le regroupement de plusieurs dispositifs proches sur une même fréquence, avec des distances entre les périphériques inférieures à 100 mètres, préférablement inférieures à 10 mètres.

La figure 2 illustre un exemple de dispositif de mesure multi cotes selon une variante de l'invention. La pièce 30 dont on souhaite prendre les mesures est maintenue par un système de positionnement non représenté. Une pluralité de sondes 40, 45 fixées sur un ou plusieurs supports rigides mobiles sont amenées en position de mesure de la pièce 30 et viennent prendre une position par rapport à celle-ci. On observe ainsi pièce après pièce la variation de dimension obtenue pour la même configuration de sonde comparativement à une pièce de référence connue. Lorsque la pièce 30 est une pièce tournée ou présente une symétrie de rotation, elle est optionnellement entraînée en rotation autour de son axe lors de la mesure et ainsi peut être mesurée pendant la révolution à plusieurs intervalles de temps.

Le réseau est organisé autour d'une station de base 20, qui est équipée d'une interface sans fil bidirectionnel 80, et au moins une interface de communication avec un système de supervision comme par exemple un ordinateur. L'interface sans fil permet de communiquer avec les interfaces des sondes 40, 45, et reçoit les données des sondes 40, 45, comme par exemple le résultat de la mesure, mais également permet l'interrogation d'autres paramètres. La connaissance simultanée des variations dimensionnelles relatives des cotes mesurées par les sondes 40, 45 est transmise à l'unité de traitement 20 qui les traite pour obtenir des informations complexes et combiner des mesures en fonction des configuration pour déterminer diamètre, épaisseur, et toute sorte de paramètre dimensionnel que l'on peut calculer et utiliser pour évaluer les erreurs de perpendicularité, de parallélisme, de concentricité, d' orthogonalité, de conicité et tirer les statistiques en tenant compte de l'orientation et des effets de l'environnement (température, vibration, accélération, contrainte) et décider du triage des pièces.

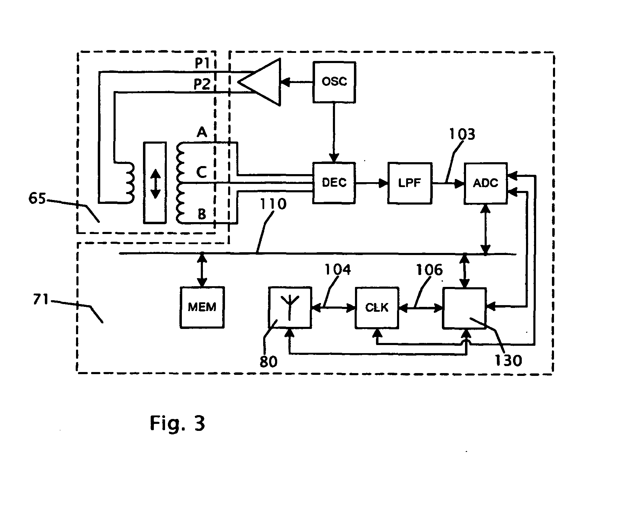

La figure 3 illustre schématiquement un exemple de réalisation, une structure possible de l'unité numérique de traitement 71. Il faut comprendre, toutefois, que l'invention n'est pas limitée à cette structure et comprend aussi d'autres variantes fonctionnellement équivalentes à l'invention revendiquée.

Un exemple de transducteur inductif 65 est représenté en cet exemple comme un capteur LVDT. Un signal alterné provenant de l'oscillateur OSC est injecté dans le primaire. Un signal analogique de mesure, aux bornes A, B, C est ainsi obtenu. Ce signal est représentatif de la position du noyau plongeur et par conséquent de la touche de palpage 20. un démodulateur, au moyen d'échantillonneur de signaux 103 transforme le signal en une information numérique de variation dimensionnelle de position de la touche de palpage 20. La représentation numérique est enregistrée au besoin dans la mémoire MEM par le bus de données 110 et est accessible par le processeur 130 jusqu'à ce qu'elle soit transmise à la station de base et à l'unité centrale.

Selon un aspect de la présente invention, l'unité 71 comprend également un circuit d'horloge CLK fournissant un signal d'horloge précis qui sert comme base des temps pour l'unité 71. Cette base de temps peut être utilisée pour dater une information comme c'est souvent le cas, mais aussi permet dans le cadre de cette invention de programmer un déclenchement de l'échantillonnage de mesure pour l'instant programmé, il fonctionne comme un compte à rebours jusqu'à l'instant de la mesure. Le circuit d'horloge CLK est synchronisé avec les autres circuits d'horloge des autres unités formant le réseau sans fil 80 pour garder le synchronisme avec les autres circuits d'horloge des autres unités formant le réseau sans fil 80 dans un certain temps. La synchronisation se produira de temps en temps, ou lors de l'échange de message, sans besoin de synchronisation permanente.

Plusieurs mécanismes de synchronisation d'horloge sont possibles et compris dans le cadre de l'invention. Préférablement la synchronisation est effectuée au niveau du protocole de réseau (flèche 104), l'horloge CLK se synchronise au moyen du signal radio de l'interface sans fil 80. Ce message de synchronisation est généralement contenu dans le début des messages transmis par l'unité principale de gestion du réseau.

Après l'étape de synchronisation des horloges des sondes 40, 45 visibles sur la figure 1, l'unité de contrôle vérifie que les sondes 45 sont prêtes pour la mesure et ensuite envoie des commandes aux sondes par le réseau sans fil afin de programmer l'instant de mesure qui sera utilisé pour échantillonner les signaux électriques analogiques du transducteur 103 de mesure.

Dans une variante de cette invention le dispositif qui concentre les communications sans fil et qui sert de station de base permet d'organiser, de synchroniser et de commander les sondes et les périphériques. Une station de base regroupe la communication des sondes et des périphériques sur des bandes de fréquences, appelées aussi canaux, et ordonne les sondes et les périphériques d'un canal pour avoir des communications structurées. Chaque canal peut avoir sa propre communication indépendamment. Une station de base travaille sur un des canaux à disposition, l'utilisateur peut la programmer selon les besoins. La bande passante de chaque canal est répartie entre chaque participant et la fréquence de modulation est définie de telle sorte que le temps de transmission par participant est suffisant pour envoyer dans la majorité des cas l'intégralité de l'information à transmettre, par exemple le résultat de la mesure, de préférence en une transmission.

Dans d'autres variantes fonctionnellement équivalentes, l'invention peut utiliser d'autres types de modulation. Le système peut donc présenter des canaux de transmission, permettant la communication indépendante entre les noeuds du réseau 80, qui ne correspondent pas à des bandes de fréquence distinctes.

Préférablement, le dispositif organise les périphériques au moyen d'un protocole simple car tous les périphériques se trouvent proches les uns des autres, les délais de transmissions entre les noeuds composant le réseau 80 sont donc modestes et de grandeur comparable. Il n'y a pas de nécessité de faire de synchronisation successive pour l'ajustement des éventuels décalages occasionnés par les temps de propagation. Le dispositif principal va donc donner la synchronisation, de plus il va parler le premier, pour donner les ordres de mesure et les ordres de programmation, ensuite en fonction de l'organisation des périphériques, ceux-ci vont répondre séquentiellement les uns après les autres selon un ordre prédéfini.

Selon un aspect de l'invention, l'organisation des périphériques se déroule de la manière suivante: le périphérique a un identifiant interne unique fixe, il va d'abords rechercher la dernière station de base connue, sur le dernier canal utilisé et tenter de faire une annonce. S'il ne trouve pas de station de base ou que sa précédente réservation n'est plus libre, il va chercher une nouvelle station de base sur une fréquence ou canal libre sur laquelle se trouve une station de base qui a encore des réservations possibles. Il va procéder ainsi jusqu'à trouver de la disponibilité sur une station de base et recevoir un numéro d'ordre dans un canal.

Le processus d'annonce se fait de préférence dans un espace temps réservé à cet usage. Une fois que le canal, la station de base et le numéro d'ordre sont déterminés, la réservation est affectée au périphérique pour une durée qui peut être déterminée ou infinie. En cas de non activité durant un nombre important de cycle, les affectations peuvent être libérées automatiquement. Un périphérique absent peut proposer de reprendre son affectation soit redemander une nouvelle affectation. On peut aussi déterminer par programmation de façon permanente une réservation.

La station de base qui n'a plus de réservation disponible l'annonce dans ces messages ce qui permet aux sondes de s'adresser directement à une station de base qui peut l'accepter.

Ensuite les périphériques fonctionnent sous leur numéro d'ordre dans le canal qui lui a été affecté jusqu'à leur réinitialisation ou la réinitialisation de la station de base. Il faut comprendre par réinitialisation, l'action volontaire d'effacement des affectations, en principe les paramètres résistent à une simple coupure de courant. L'affectation du numéro d'ordre va ainsi permettre d'identifier les périphériques dans la communication sans fil car ceci leur donne une position dans la transmission du canal à partir du message de synchronisation de la station de base. Ceci rend inutile la transmission d'identifiant de périphérique, mais l'utilisation d'identifiant reste possible.

Chaque station de base est capable de travailler sur un des canaux disponibles, l'utilisateur peut fixer le canal manuellement par programmation ou en fonction des besoins et de l'environnement rechercher un canal libre et qui a un faible bruit ambiant. La station se met alors à écouter chaque canal pour déterminer le meilleur choix en fonction des stations existantes et du bruit mesuré. Avantageusement, les périphériques qui travaillent sur batterie peuvent fonctionner à plus faible consommation sur des canaux où le signal radio est peu perturbé, car le signal d'émission nécessaire sera plus faible.

La réception des mesures ou des interrogations passées aux sondes par la station de base peut nécessiter un message de quittance de la station de base en retour vers chaque périphérique à la suite de validation des éléments de contrôle inclus dans les transmissions.

Dans une variante de cette invention la station de supervision se connecte par le réseau radio sur la station de base. La station de base peut se résumer à un système portable de type ordinateur de poche ou PDA (personnal digital assistant), permettant de visualiser rapidement l'état des systèmes sur l'endroit de la mesure. Permettant ainsi au technicien de régler de façon dynamique les sondes et les éléments actifs avant la mise en service. La communication se fait au travers de la station de base dans le mode de travail normal_{.}

La sonde et l'ordinateur de poche peuvent aussi comporter un mode de dépannage avec connexion directe entre eux; ce mode reste réservé au réglage, car il n'effectue pas de synchronisation horaire, mais permet de programmer des paramètres, comme par exemple ce qui concerne la connexion à la station de base sans que le périphérique fasse des recherches automatique, et peut aussi permettre d'effectuer des reprogrammations (firmware) ou des paramétrages (dump) pour échanger une sonde par une autre sans repasser par toutes les étapes de paramètrage.

Les sondes sont équipées de batteries rechargeables que l'on peut aussi échanger au besoin ou alimenter pendant la mesure. Néanmoins dans certains cas d'utilisation, il est utile que les sondes soient exemptes de câblages pour plus de liberté et moins d'influence sur les positionnements. Les sondes avertissent la station de base en cas de défaillances de batterie, avant que celles-ci ne soient plus en état de mesurer. A cet effet les sondes sont équipées d'un capteur de charge de la batterie.

Les périphériques particuliers peuvent bénéficier d'une programmation spéciale autant que la station de base. De plus la station de base peut inclure des modules de programmation spécifiques à des périphériques qui demandent une interactivité pour la transmission de commande ou l'exécution de macro commande, pour des opérations qui demandent l'exécution d'opération sur une unité de calcul puissante ou plus rapide que celle disponible dans le périphérique. On trouve dans cette catégorie de périphérique, les stations de supervision, les déclencheurs et détecteur d'état préliminaires à la mesure et les systèmes de triage, les systèmes de calcul pour le post traitement de la mesure et le traitement et la manipulation des pièces mesurés. Tous peuvent fonctionner par le réseau sans fil ou être reliés et commandés par une station de base pour autant qu'une programmation spécifique soit implémentée dans la station de base. Cette programmation sert à définir comment ils interagissent entre eux, pour distinguer par exemple déclencheur d'arrêt d'urgence d'un déclencheur de mesure et à qui transmettre le résultat d'une opération venant d'un périphérique.

Dans une variante de cette invention les sondes se mettent en veille si elles ne perçoivent pas de message pendant une longue période, cette durée avant veille est programmable, pendant la veille les récepteurs écoutent le canal de façon moins permanente et ne font plus d'émission. Pour les réveiller il faut agir sur la sonde ou effectuer remise en charge.

Dans une variante de l'invention la sonde est équipée d'une sonde de température pour mesurer l'échauffement du capteur après une veille prolongée ou lors de mesures ponctuelles, pour pouvoir adapter au mieux les conditions de travail aux caractéristiques calibrées de linéarisation. On pourra par décider de faire des calibration à températuure réduite ou par contre échauffer le capteur pour qu'il atteigne la température de référence pour la mesure. Les paramètres additionnels des capteurs peuvent être retournés en plus de la mesure à l'unité de traitement, ou servir de conditions préalables à une mesure ou à sa planification et sa programmation. Ceci n'est pas limité au capteur de température, mais peut aussi concerner une orientation à atteindre ou une force de contact nécessaire ou une mesure d'accélération ou le niveau de vibrations ou une position limite à ne pas dépasser ou un éclairage ambiant qui perturbe la mesure optique, ainsi que toutes les autres conditions de la mesure que l'on peut qualifier et qui ont une influence sur le capteur ou sur la grandeur physique mesurée par le capteur.

Dans une variante de l'invention, la station de base utilise un mode de programmation rapide des périphériques. La station de base utilise l'ensemble des plages d'émission pour programmer simultanément les périphériques dans un mode rafale (burst mode), au lieu d'utiliser son unique espace temps d'émission. Cette méthode offre l'avantage de consommer très peu de temps. Les sondes restent à l'écoute durant une courte période pour la donnée d'ordre et la programmation. Dans cette variante chaque plage est utilisée pour les données à transmettre à chaque périphérique spécifiquement, et envoie autant de fois que nécessaire l'ensemble des paramètres aux sondes avant d'effectuer la mesure.

Dans une variante du mode rafale, les séquences de programmation sont prédéfinies à l'avance et sont toujours envoyés dans le même ordre, en préambule à une mesure. De ce fait chaque périphérique reçoit un nombre identique de paramètre y compris des paramètres vides si besoin. Ce qui optimise le nombre de cycle d'émission nécessaire pour paramétrer l'ensemble des périphériques du canal. Dans ce mode chaque paramètre à son propre cycle d'émission attribué, pour que chaque périphérique reçoive le même type de paramètre en même temps. Par la suite le mode de mesure se déroule dans le mode d'émission -réception conventionnel.

Dans une variante de cette invention, les stations de base ou les sondes peut recevoir des commandes de programmation de paramètres et des commandes d'interrogations d'état. Principalement elle recevra des paramètres de fonctionnement, fixant la synchronisation horaire et permettant de programmer l'horloge interne, mais aussi des informations de tolérance comme les minimums et maximums, ou encore d'autres paramètres utile permettant de traiter tout ou en partie la mesure. Ce genre de périphérique est capable d'être entièrement reprogrammé à distance pour ajouter des fonctionnalités et traiter des capteurs internes supplémentaires. Elle est aussi capable d'intégrer des fonctions plus complexes de calcul pour tenir compte d'angles de projection ou de proportionnalité ou pour corriger des erreurs de positionnement fournies par d'autres sondes ou par ses propres capteurs ou être capable de décision en fonction du résultat de la mesure.

Dans une variante de cette invention les stations de base ou les sondes reçoivent en premier la programmation des paramètres. Ensuite elles reçoivent une première mesure venant des sondes de positionnement qui qualifie le système de mise en position de mesure vers la pièce. Si besoin elles reçoivent des données correctives par rapport au positionnement et l'orientation du support de mesure, qui support les sondes, pour adapter le résultat en fonction de ces variations d'alignement. Ces corrections peuvent être exprimées en 3 dimensions. Enfin elles reçoivent la programmation horaire de leur mesure. Dans cette variante l'unité de calcul peut être contenue dans la sonde pour des opérations simples. Dans le cas de mesures complexes, le système peut avoir recours à une unité de calcul, comme par exemple un poste de supervision, pour effectuer des opérations de calcul géométrique plus lourdes lorsqu'il y a de nombreuses sondes dans des dispositions particulières, dans ce cas la sonde reçoit en paramètre les corrections à appliquer adaptées à son propre référentiel de mesure.

Dans une variante de cette invention les stations de base ou les sondes sont capables de mesurer et s'adapter selon des paramètres d'orientation et de positionnement. Ceci au moyen de capteurs supplémentaires comme par exemple des accéléromètres, des capteurs de pression, des capteur de vibration, des sondes de température capables de fournir des informations qualifiant les conditions et le point de fonctionnement du capteur et permettant de déduire le résultat le plus exact possible lors de la mesure ponctuelle, pour qu'il soit comparable à celui de la mesure dans des conditions idéale exempte d'influence et parfaitement stabilisé. Ensuite en fonction des corrections d'orientation, des perturbations et du point de fonctionnement, renvoie une valeur adaptée et corrigée de la mesure.

On trouve aussi des stations de base ou des sondes permettant de tenir compte de la position des systèmes de posage, qui permet de corriger la mesure de plusieurs sondes en détectant les variations d'orientation qui influent sur la mesure de chaque sonde. Une unité de calcul peut être amenée à calculer les corrections, mais il est aussi envisageable que des sondes de positionnement transmettent ces paramètres au préalable à la mesure pour que les sondes qui mesurent la pièce à mesurer en tiennent compte pour l'élaboration du résultat de la mesure pour tenir compte de leur orientation spécifique. On constate aussi que ce type de réalisation nécessite une connaissance de l'orientation des sonde pour savoir dans quel sens effectuer une correction de positionnement ou analyser une variation avec des sondes en opposition.

Dans une variante de cette invention, les stations de base ou les sondes peuvent donner un résultat simple ou combiné avec un autre résultat, par exemple dans le cadre de sondes en opposition ou en parallèle ou réparties selon une géométrie régulière, pour obtenir un résultat synthétique de tolérance sur une dimension, qui demande un cumul ou une différence des résultats, ou envoyer un statut de plusieurs périphériques après traitement de plusieurs informations.

Dans une variante de cette invention les sondes comprennent aussi des capteurs d'orientations, par exemple des accéléromètres, et/ou des capteurs de la force de gravité locale, permettant d'orienter précisément la direction de la mesure obtenue et retourner une valeur vectorielle, par exemple une longueur vectorielle.

Dans une variante de cette invention, le système de supervision peut servir d'aide à l'utilisateur pour positionner et/ou orienter les sondes dans des plages de travail optimales. De façon à obtenir une mesure de qualité dans une plage dont la variation est quantifiable et calibrée avec une précision accrue et une entropie minimale. On peut par exemple paramétrer un échauffement type pour un capteur LVDT et le calibrer dans ces conditions spécifiques pour éviter de trainer des formules complexes avec plusieurs paramètres. L'entropie est minimalisée sur le maximum de paramètres possibles.

Le système permet aussi de positionner la course de la sonde pour que la course utile soit placée de façon optimale par rapport à la situation à mesurer et surtout pour que l'ensemble des sondes qui mesurent conjointement soient placées dans des conditions de mesure les plus semblables les unes aux autres et loin des fin de course des sondes. En prenant bien soin de ces aspects de non linéarité cela permet de réduire l'erreur globale de mesure. Le système de supervision rend justement ce service, en permettant de visualiser et positionner la plage de mesure de la sonde, par rapport à sa course et le type de transducteur utilisé, en rapport avec la pièce à mesurer et la variation de mesure prévisible.

Dans cette configuration on peut être désireux de mettre la valeur mesurée à zéro dans la position de référence, pour n'observer que les variations lors de la mesure des pièces. Le système est capable de fournir avantageusement cette option permettant de programmer la plage de mesure avec une valeur statique de décalage. Cette valeur peut être la valeur d'une cote réelle de référence à laquelle on ajoute la variation ou encore la valeur permettant d'isoler la variation de dimension par rapport à la pièce de référence.

Dans une variante de l'invention, les sondes sont organisées autour d'un système central émetteur-récepteur capable de transmettre les ordres de mesure. Ces mêmes ordres de mesure provenant de déclencheurs portables, capable de travailler sur un canal de communication, et un ensemble de sondes capables de recevoir l'ordre de mesure et d'effectuer la mesure après un délai programmé prédéfini. Puis en fonction des tolérances programmées dans les sondes, celle-ci retournent un statut bon ou mauvais à des organes de triage, le tout régit par un réseau sans fil de périphériques sans fil, de type point à point, autour d'une station de base simplifiée qui ne nécessite pas de poste de supervision permanent.

Dans ce mode de réalisation, les sondes et les périphériques nécessitent une programmation préalable pour déterminer les paramètres de mesure, de synchronisation et d'ordre dans un canal radio. Ensuite en fonction de chaque résultat de chaque sonde séquentiellement un système de triage collecte reçoit d'une station de base ces états et effectue le triage nécessaire. La station de triage peut aussi s'imaginer inclue dans une station de base.

Dans une variante on utilisera des indicateurs d'état, sous forme de sondes à déclenchement ou des mesures de position destinés à valider la position et l'orientation des éléments mobiles supportant les sondes, lorsqu'on les amène en position pour la mesure. Le système permettra aussi de détecter l'absence de pièce et les erreurs possibles du système ainsi que le traitement adapté à chaque situation (erreur de manipulation, collisions, arrêt d'urgence, etc,...) et aussi éviter l'envoi de mesures erronées.

Dans une variante de cette invention, il est possible de fixer les sondes sur un posage au bout d'un bras articulé ou d'un robot. Ensuite le bras articulé positionne le posage pour effectuer des mesures de grande précision relative à différents points d'une pièce à contrôler. Dans ce cas l'absence de fils sur les sondes est très intéressante. On peut aussi envisager la sonde dans les machines outils, à la place d'un outil, pour être chargé dans une machine pour effectuer une mesure dans un cycle de production.

Dans une autre variante de cette invention, les sondes sont programmées pour connaitre le minimum et maximum et l'orientation de mesure pour ensuite retourner une information de tolérance à un système de triage. L'avantage d'un tel système est d'offrir une solution modulaire capable de se passer de câblage et ne nécessitant peu de matériel.

### Numéros de référence employés sur les figures

- 40: sonde à déplacement axial
- 45: sonde à bras pivotant
- 51: boitier
- 60: touche
- 65: transducteur
- 71: unité numérique de traitement
- 80: interface sans fil
- 20: station de base
- 30: pièce à mesurer
- 110: bus de données
- 103: signal électrique
- 130: processeur
- 104: signal de synchronisation .
- 106: signal de synchronisation

## Revendications

1. Système d'acquisition de variation de dimension ayant une pluralité de sondes de mesure de position, chacune comprenant : un transducteur fournissant un signal électrique analogique représentatif de la variation de distance entre ladite sonde et la pièce observée ; une unité numérique d'échantillonnage dudit signal électrique analogique capable de le transformer en signal numérique proportionnel au déplacement; une interface bidirectionnelle pour un réseau de communication sans fil reliant lesdites sondes avec une unité de contrôle ; et une unité de traitement munie d'une horloge embarquée permettant de piloter ladite unité numérique et ladite interface de communication,
le système étant **caractérisé par le fait que** lesdites horloges desdites sondes sont programmables au travers de ladite interface de communication,
ladite programmation permettant de programmer l'instant de la mesure dans lesdites sondes.

2. Système selon la revendication précédente, dans lequel le dit réseau de communication sans fil comprend au moins une station de base qui organise, synchronise et envoie des commandes aux dites sondes et périphériques participant au réseau.

3. Système selon la revendication précédente, dans lequel ladite interface de communication sans fil transmet les mesures desdites sondes et la programmation des paramètres de mesure.

4. Système selon la revendication précédente, comprenant un ou plus systèmes de supervision portables connectables dans le réseau et arrangés pour interroger ladite station de base et/ou lesdites sondes et périphériques.

5. Système selon l'une des revendications précédentes, dans lequel ladite programmation horaire est définie par un décalage temporel de mesure programmable dans chaque sonde, ladite programmation horaire pouvant varier selon lesdites sondes pour effectuer des mesures synchrones ou asynchrones.

6. Système selon l'une des revendications précédentes, dans lequel la mesure est déclenchée par un compte à rebours de ladite horloge, ledit compte à rebours étant déclenché par un signal radio de synchronisation et une commande de déclenchement.

7. Système selon l'une des revendications précédentes, dans lequel les sondes effectuent une série de mesure à des intervalles de temps définis par programmation.

8. Système selon l'une des revendications précédentes, dans lequel les sondes sont aussi dotées d'autres moyens de mesure permettant de tenir compte de l'état de la sonde et des perturbations environnementales au moment de la mesure.

9. Système selon l'une des revendications précédentes, dans lequel les sondes comprennent aussi des capteurs d'orientations et sont adaptées pour fournir des mesures vectorielles.

10. Système selon l'une des revendications précédentes, dans lequel la fréquence et la puissance du signal radio sont optimisées par rapport au bruit ambiant de manière à limiter la consommation électrique des sondes pour l'émission sur ledit réseau sans fil.

11. Système selon l'une des revendications précédentes, arrangé pour déterminer et transmettre une information de tolérance en fonction d'une limite de tolérance programmée.

12. Système selon la revendication 4 dans lequel le système de supervision est arrangé pour visualiser la course de la sonde et permettre son positionnement et son orientation par rapport à la pièce à mesurer.

13. Système selon l'une des revendications précédentes, comprenant un interrupteur ou poussoir de déclenchement arrangé pour déclencher des opérations programmées.

14. Système selon l'une des revendications précédentes, arrangé pour commander par le réseau sans fil des systèmes de triage.

15. Système selon l'une des revendications précédentes, arrangé pour vérifier l'état des périphériques avant de programmer une mesure.

16. Système selon l'une des revendications précédentes, arrangé pour calculer dans ladite unité de contrôle d'au moins une variation d'une des grandeurs suivantes : diamètres, épaisseurs, perpendicularité, parallélisme, concentricité, orthogonalité et conicité.

## Claims

1. System for acquiring variations in dimension having a plurality of position measuring probes, each comprising: a transducer supplying an analog electric signal that is representative of the variation in distance between said probe and the observed part; a digital unit for sampling said analog electric signal and capable of transforming it into a digital signal proportional to the displacement; a bidirectional interface for a wireless communication network connecting said probes with a control unit; and a processing unit provided with an embedded clock enabling said digital unit and said communication interface to be controlled,
the system being **characterized by** the fact that said clocks of said probes can be programmed through said communication interface, said programming enabling the instant of measurement to be programmed in said probes.

2. System according to the preceding claim, wherein said wireless communication network comprises at least one base station that organizes, synchronizes, and sends commands to said probes and peripherals participating in the network.

3. System according to the preceding claim, wherein said wireless communication interface transmits measurements of said probes and the programming of the measurement parameters.

4. System according to the preceding claim, having one or several portable monitoring systems that can be connected in a wireless network and arranged so as to interrogate said base station and/or said probes and peripherals.

5. System according to one of the preceding claims, wherein said time programming is defined by a time delay of the measurement that can be programmed in each probe, said time programming being variable according to said probes to perform synchronous or asynchronous measurements.

6. System according to one of the preceding claims, wherein the measurement is triggered by a countdown of said clock, said countdown being triggered by a synchronization radio signal and a trigger command.

7. System according to one of the preceding claims, wherein the probes perform a series of measurements at time intervals defined by programming.

8. System according to one of the preceding claims, wherein the probes are also provided with other measurement means making it possible to take into account environmental disturbances at the moment of the measurement.

9. System according to one of the preceding claims, wherein the probes also comprise orientation sensors and are adapted to supply vector measurements.

10. System according to one of the preceding claims, wherein the frequency and power of the radio signal are optimized relative to the ambient noise so as to limit the probes' electric consumption for transmitting on said wireless network.

11. System according to one of the preceding claims, arranged to determine and transmit tolerance information depending on a programmed tolerance limit.

12. System according to claim 4, wherein the monitoring system is arranged for visualizing the probe's stroke and enabling it to be positioned and oriented relative to the part to be measured.

13. System according to one of the preceding claims, having a trigger switch or push-button arranged for generating a measurement programming command.

14. System according to one of the preceding claims, arranged for controlling sorting systems through the wireless network.

15. System according to one of the preceding claims, arranged for checking the state of the peripherals before programming a measurement.

16. System according to one of the preceding claims, arranged for computing in said control unit at least one variation of one of the following values: diameter, thickness, perpendicularity, parallelism, concentricity, orthogonality and conicity.

## Patentansprüche

1. System zum Bestimmen von Variationen in der Grösse aufweisend eine Mehrzahl von Positionsmessfühlern, jeder aufweisend:
einen Umwandler zur Ausgabe eines analogen elektrischen Signals, das für die Variation in dem Abstand zwischen dem Messfühler und dem beobachteten Teil repräsentativ ist;
eine digitale Einheit zum Abtasten des analogen elektrischen Signals und geeignet zum Umwandeln des analogen elektrischen Signals in ein digitales Signal proportional zu der Verschiebung;
eine bidirektionale Schnittstelle für ein kabelloses Kommunikationsnetzwerk, die die Messfühler mit einer Steuerungseinheit verbindet; und
eine Verarbeitungseinheit mit einer eingebetteten Uhr, die erlaubt, die digitale Einheit und die Kommunikationsschnittstelle zu kontrollieren;
Das System ist durch die Tatsache gekennzeichnet, dass die Uhren dieser Messfühler durch die Kommunikationsschnittstelle programmiert werden können, wobei die Programmierung erlaubt, den Moment der Messung in den Messfühlern zu programmieren.

2. System nach dem vorhergehenden Anspruch, wobei das kabellose Kommunikationsnetzwerk zumindest eine Basisstation aufweist, die organisiert, synchronisiert, und Kommandos zu dem Messfühler und zu Peripheriegeräten, die an dem Netzwerk teilnehmen, sendet.

3. System nach dem vorhergehenden Anspruch, wobei die kabellose Kommunikationsschnittstelle Messungen der Messfühler und Programmierungen der Messparameter übermittelt.

4. System nach einem der vorhergehenden Ansprüche, aufweisend ein oder mehrere tragbare Überwachungssysteme, die in einem kabellosen Netzwerk verbunden werden können und so ausgebildet sind, dass sie die Basisstation und/oder die Messfühler und Peripheriegeräte befragen können.

5. System nach einem der vorhergehenden Ansprüche, wobei die Zeitprogrammierung durch eine Zeitverzögerung der Messung definiert ist, die in jedem Messfühler programmiert werden kann, wobei die Zeitprogrammierung entsprechend jedes Messfühlers variable ist, um eine synchrone oder asynchrone Messung durchzuführen.

6. System nach einem der vorhergehenden Ansprüche, wobei die Messung durch einen Countdown der Uhr getriggert wird, wobei der Countdown durch eine Synchronisierungsradiosignal und einen Triggerbefehl getriggert wird.

7. System nach einem der vorhergehenden Ansprüche, wobei die Messfühler eine Serie von Messungen in von der Programmierung definierten Zeitintervallen durchführen.

8. System nach einem der vorhergehenden Ansprüche, wobei die Messfühler auch andere Messmittel aufweisen, die es ermöglichen umliegende Störungen im Moment der Messung Rechnung zu tragen.

9. System nach einem der vorhergehenden Ansprüche, wobei die Messfühler auch Orientierungssensoren aufweisen und ausgebildet sind, Vektormessungen durchzuführen.

10. System nach einem der vorhergehenden Ansprüche, wobei die Frequenz und die Leistung des Radiosignals relativ zu dem umliegenden Rauschen optimiert werden, so dass der elektrische Verbrauch des Messfühlers für die Übertragung in dem kabellosen Netwerk limitiert wird.

11. System nach einem der vorhergehenden Ansprüche, ausgebildet Toleranzinformationen, die von einem programmierten Toleranzlimit abhängen, zu bestimmen und zu übermitteln.

12. System nach Anspruch 4, wobei das Überwachungssystem für die Visualisierung der Bewegung der Messfühler ausgebildet ist und es erlaubt, relativ zu dem zu vermessenden Teil positioniert und orientiert zu werden.

13. System nach einem der vorhergehenden Ansprüche, aufweisend einen Triggerumschalter oder einen Triggerdruckschalter angeordnet für das Triggern eines Messprogrammierbefehls.

14. System nach einem der vorhergehenden Ansprüche, ausgebildet für die Kontrolle der Sortiersysteme.

15. System nach einem der vorhergehenden Ansprüche, ausgebildet für die Überprüfung des Zustands der Peripheriegeräte vor der Programmierung einer Messung.

16. System nach einem der vorhergehenden Ansprüche, ausgebildet für das Berechnen in der Steuereinheit wenigstens eine Variation eines der folgenden Werte: Durchmesser, Dicke, Rechtwinkeligkeit, Parallelität, Konzentrität, Orthogonalität und Konizität.
